# EUROPÄISCHE PATENTSCHRIFT

(11) **EP 4 341 662 B1**
(45) Veröffentlichungstag und Bekanntmachung des Hinweises auf die Patenterteilung: **26.11.2025**
(21) Anmeldenummer: 22728509.5
(22) Anmeldetag: 10.05.2022
(51) Int. Cl.: G01M 13/025

(54) **PRÜFRAD FÜR EINEN ANTRIEBSSTRANGPRÜFSTAND UND ANTRIEBSSTRANGPRÜFSTAND**
TEST WHEEL FOR A DRIVE TRAIN TEST BENCH AND DRIVE TRAIN TEST BENCH
ROUE D'ESSAI POUR BANC D'ESSAI DE CHAÎNE CINÉMATIQUE ET BANC D'ESSAI DE CHAÎNE CINÉMATIQUE

(30) Priorität: 20.05.2021 DE 102021205144
(43) Veröffentlichungstag der Anmeldung: 27.03.2024
(73) Patentinhaber: ZF Friedrichshafen AG, 88046 Friedrichshafen (DE)
(72) Erfinder: WEBER, Sebastian, 94034 Passau (DE); EGNER, Sebastian, 94209 Regen (DE)
(74) Vertreter: ZF Friedrichshafen AG
(86) Internationale Anmeldenummer: PCT/EP2022/062591
(87) Internationale Veröffentlichungsnummer: WO 2022/243105

(56) Entgegenhaltungen:
- WO-A1-2013/052976
- AT-B1- 517 842
- DE-A1- 102010 016 587

## Beschreibung

Die Erfindung betrifft ein Prüfrad für einen Antriebsstrangprüfstand gemäß dem Oberbegriff von Anspruch 1 sowie einen entsprechenden Antriebsstrangprüfstand.

Getriebeprüfstände bzw. Antriebsstrangprüfstände zum Prüfen von Kraftfahrzeuggetrieben bzw. von vollständigen Kraftfahrzeugantriebssträngen sind aus dem Stand der Technik bekannt. Derartige Prüfstände werden üblicherweise zur Qualitätskontrolle verwendet, um Funktionsstörungen in Antriebssträngen frühzeitig durch eine Reihe von Belastungstests zu erkennen. Typische Funktionsstörungen entstehen z.B. durch spielbehaftete Bauteile, wie z. B. Zahnräder, Synchronringe, Synchronkörper, Lamellenkupplungsscheiben und Wellen, die ausgelenkt und zu Schwingungen angeregt werden können. Im Rahmen einer derartigen Funktionserprobung werden in der Regel auch das Akustikverhalten und die Schaltqualität geprüft. Darüber hinaus finden derartige Prüfstände aber auch in der Entwicklung und stetigen Verbesserung von Kraftfahrzeugantriebssträngen Verwendung.

In diesem Zusammenhang beschreibt die DE 103 28 461 A1 einen Fahrzeugprüfstand mit einer Belastungsmaschine für jedes antreibbare Rad eines Kraftfahrzeugs. Die Belastungsmaschinen sind dabei direkt, beispielsweise über Radbolzen, oder indirekt, beispielsweise über einen Riementrieb, mit den Felgen der Kraftfahrzeugräder verbunden, so dass die Belastungsmaschinen den Antriebsstrang sowohl antreiben als auch bremsen können. Der Fahrzeugprüfstand der DE 103 28 461 A1 umfasst weiterhin eine Rahmenkonstruktion, über welche das Kraftfahrzeug und die Belastungsmaschinen angehoben und zueinander ausgerichtet werden können. Während des Prüfvorgangs wird das Kraftfahrzeug vollständig von der Rahmenkonstruktion getragen, so dass die Fahrzeugräder keinen Bodenkontakt haben.

Die US 10 739 234 B2 zeigt ein Dynamometer-Testsystem für ein Fahrzeug, umfassend eine Dynamometer-Testeinheit und eine Adapterplatte. Die Adapterplatte ist einerseits mit einer Radnabe eines zu testenden Kraftfahrzeugs verbindbar, so dass das Fahrzeug auf der Adapterplatte wie auf einem Fahrzeugreifen aufgestellt werden kann. Andererseits ist die Adapterplatte mit einer Ausgangswelle der Dynamometer-Testeinheit verbindbar, so dass die Adapterplatte eine Triebverbindung zwischen der Radnabe des Fahrzeugs und der Ausgangswelle herstellen kann. Während eines Testvorgangs wird das Fahrzeug mit der Adapterplatte angehoben, so dass die Adapterplatte nicht den Boden berührt. Auf einem radialen Umfang der Adapterplatte kann zudem eine Gummischicht angeordnet sein.

Aus der EP 2 187 193 B1 ist ein Simulationsrad bekannt, das über eine Nabenbefestigungsstruktur wie ein Fahrzeugreifen an der Nabe eines Kraftfahrzeugs montiert werden kann. Der Nabenbefestigungsstruktur axial gegenüber liegt ein Wellenaufnahmeabschnitt, der mit einem Antrieb verbunden werden kann, um ein Drehmoment über das Simulationsrad in die Nabe des Fahrzeugs einzuleiten. Ein Reifenaufnahmeabschnitt umgibt den Wellenaufnahmeabschnitt konzentrisch und dient dazu, einen Reifen zu montieren. Zwischen dem Wellenaufnahmeabschnitt und dem Reifenaufnahmeabschnitt ist eine Drehlagerung vorgesehen, so dass der Wellenaufnahmeabschnitt gegen der Reifenaufnahmeabschnitt drehbar ist. Über einen Kupplungsmechanismus kann der Wellenaufnahmeabschnitt an den Reifenaufnahmeabschnitt gekoppelt werden, so dass diese nicht mehr gegeneinander verdrehbar sind.

Die AT 517 842 A4 beschreibt ein Prüfrad mit einer Radscheibe, die in eine zentrale Radscheibenbuchse übergeht. In der Radscheibenbuchse ist ein Befestigungsflansch drehbar gelagert, der einerseits mit einer Radnabe eines Kraftfahrzeugs und andererseits mit einem Antriebswellenverbindungsflansch einer Antriebseinheit verbunden werden kann, um eine Triebverbindung zwischen der Radnabe und der Antriebseinheit herzustellen. Die Verdrehbarkeit der Radscheibe relativ zum Befestigungsflansch ist durch ein axial verschiebbares Sperrmittel sperrbar, welches drehfest am Befestigungsflansch angeordnet ist und dazu ausgebildet ist, in einer eingerückten Position eine drehfeste und formschlüssige Verbindung mit der Radscheibenbuchse herzustellen. In einer ausgerückten Position des Sperrmittels ist der Befestigungsflansch hingegen relativ zur Radscheibenbuchse drehbar.

Aus der WO 2013/052976 A1 ist ein Antriebsstrangprüfstand zum Prüfen des Antriebsstrangs eines Fahrzeugs mittels eines Prüfrads bekannt. Eine Reifenauflage des Antriebsstrangprüfstands zur Anordnung des Prüfrads zumindest in Längs- und in Querrichtung des Prüfrads ist verschieblich gelagert.

In der DE 10 2010 016 587 A1 wird ein Radsatz zur Erprobung eines Kraftfahrzeugs bei stillstehenden Reifen vorgeschlagen, welcher eine Felge und eine Nabe aufweist, die koaxial zueinander angeordnet und drehbar miteinander verbunden sind.

Die bekannten Prüfräder sind jedoch insofern nachteilbehaftet, als dass sie eine versehentliche Blockierung der Verdrehbarkeit des beim Prüfvorgang drehenden Innenteils des Prüfrads gegen den beim Prüfvorgang stillstehenden Außenteil nicht zuverlässig verhindern können. Bei einer solchen versehentlichen Blockierung während eines Prüfvorgangs wird auch der Außenteil des Prüfrads bewegt, so dass das zu prüfende Fahrzeug eine plötzliche und ungewollte Translationsbewegung erfährt, welche zu Beschädigungen des Antriebsstrangprüfstands, des zu prüfenden Antriebsstrangs bzw. Fahrzeugs und ggf. zu Personenschäden führen kann.

Es ist eine Aufgabe der vorliegenden Erfindung, ein verbessertes Prüfrad für einen Antriebsstrangprüfstand vorzuschlagen.

Diese Aufgabe wird erfindungsgemäß durch das Prüfrad für einen Antriebsstrangprüfstand gemäß Anspruch 1 gelöst. Vorteilhafte Ausgestaltungen ergeben sich aus den Unteransprüchen.

Die Erfindung betrifft ein Prüfrad für einen Antriebsstrangprüfstand, umfassend eine Radfelge, eine Radlagerung, eine Blockiervorrichtung, eine Radwelle und eine Radnabe, wobei die Radnabe drehfest auf der Radwelle angeordnet ist, wobei die Radwelle und die Radnabe über die Radlagerung drehbar in der Radfelge gehalten sind, wobei die Blockiervorrichtung drehfest mit der Radfelge verbunden ist, wobei die Radwelle dazu ausgebildet ist, über einen ersten Anschlussflansch drehfest mit einer Abtriebswelle eines zu prüfenden Antriebsstrangs verbunden zu werden und wobei die Radnabe dazu ausgebildet ist, über einen zweiten Anschlussflansch drehfest mit einer Antriebswelle des Antriebsstrangprüfstands verbunden zu werden. Das erfindungsgemäße Prüfrad zeichnet sich dadurch aus, dass die Radnabe weiterhin dazu ausgebildet ist, über einen dritten Anschlussflansch drehfest mit der Blockiervorrichtung verbunden zu werden, so dass eine Verdrehbarkeit der Radwelle gegenüber der Radfelge blockiert ist, wobei der dritte Anschlussflansch nur verbindbar ist, wenn der zweite Anschlussflansch nicht verbunden ist.

Die Erfindung beschreibt also ein Prüfrad für einen Antriebsstrangprüfstand. Der Antriebsstrangprüfstand ist dazu geeignet, einen Antriebsstrang eines Kraftfahrzeugs zu prüfen. Bei dem Antriebsstrang kann es sich gleichermaßen um einen elektromotorisch angetriebenen Antriebsstrang handeln wie auch um ein konventionell angetriebenen Antriebsstrang.

Das Prüfrad umfasst eine Radfelge, eine Radlagerung, eine Blockiervorrichtung, eine Radwelle und eine Radnabe, wobei diese Bestandteile wiederum jeweils aus einer Reihe von Unter-Bestandteilen bestehen können. Die Radfelge ist über die Radlagerung gegen die Radwelle und die Radnabe drehbar. Die Radwelle und die Radnabe sind dabei konzentrisch innerhalb der Radlagerung und der Radfelge angeordnet.

Bevorzugt ist es vorgesehen, dass die Radwelle und die Radnabe drehfest über eine Steckverzahnung miteinander verbunden sind, wobei die Radnabe gegenüber der Radwelle mittels einer Axialsicherung auf der Radwelle axial gesichert ist. Die Verbindung über eine Steckverzahnung ermöglicht dabei vorteilhaft das Übertragen auch sehr hoher Drehmomente. Die Axialsicherung kann beispielsweise als Sicherungsring ausgebildet sein, der in einer Nut auf der Radwelle angeordnet ist und ein axiales Abrutschen der Radnabe von der Radwelle verhindert.

Alternativ bevorzugt ist es vorgesehen, dass die Radwelle und die Radnabe drehfest über eine Passfeder verbunden sind. Die Verbindung über eine Passfeder ist dabei vergleichsweise kostengünstig.

Somit ist der radial äußere Teil des Prüfrads, welcher im Wesentlichen durch die Radfelge gebildet wird, also gegen den radial inneren Teil, welcher im Wesentlichen durch die Radwelle und die Radnabe gebildet wird, drehbar. Dadurch wird es vorteilhaft ermöglicht, dass das Prüfrad für den Prüfvorgang des Antriebsstrangs wie ein gewöhnliches Fahrzeugrad am Kraftfahrzeug montiert werden kann und das Kraftfahrzeug während des Prüfvorgangs auf dem Prüfrad steht.

Der zu prüfende Antriebsstrang bzw. das zu prüfende Kraftfahrzeug stützt sich also über seine Aufhängung auf das Prüfrad ab, welches seinerseits auf einem Untergrund aufgestellt ist und dort die auf ihm lastende Gewichtskraft abstützt. Dadurch ergibt sich ein realistisches, dem tatsächlichen Fahrzeugverhalten weitestgehend identisch entsprechendes Prüfverhalten während des Prüfvorgangs.

Der Untergrund kann gegenüber dem Prüfrad einen besonders hohen Reibwert aufweisen, um auch das Übertragen hoher Drehmomente vom Belastungsmotor auf das Prüfrad zu ermöglichen.

Weiterhin kann es vorgesehen sein, dass das Prüfrad kraftschlüssig oder formschlüssig mit einem Untergrund verbindbar ist. Beispielsweise kann die Haftung des Prüfrads auf dem Untergrund noch weiter erhöht werden, indem das Prüfrad etwa mittels eines Spanngurts, dessen Enden fest mit dem Untergrund verbunden sind, über seinen Außenumfang eingespannt wird. Um die Haftung des Prüfrads auf dem Untergrund nochmals weiter zu verbessern, kann das Prüfrad weiterhin zum Beispiel mittels eines Bolzens, der im Untergrund angeordnet ist und radial von außen in das Prüfrad eindringt, auf dem Untergrund angeordnet werden. Des Weiteren kann eine spezielle Befestigungsstruktur wie zum Beispiel eine Zug- oder Druckstange mit dem im Prüfbetrieb stillstehenden äußeren Teil des Prüfrads verbunden werden. Die Zug- oder Druckstange ist dabei mit dem Untergrund verbunden.

Die Blockiervorrichtung ist drehfest mit der Radfelge verbunden, wobei die Verbindung der Blockiervorrichtung an die Radfelge gleichermaßen unmittelbar - also ohne weitere Bauteile - wie auch mittelbar - also unter Verwendung weiterer Bauteile - ausgebildet sein kann. Beispielsweise kann die Blockiervorrichtung unmittelbar mit der Radfelge verschraubt sein. Ebenso ist es denkbar und bevorzugt, dass die Blockiervorrichtung und die Radfelge beispielweise beide mit einem Außenring der Radlagerung verschraubt sind, so dass in diesem Fall eine unmittelbare Verbindung zwischen der Blockiervorrichtung und der Radfelge über die Radlagerung besteht.

Die Radwelle weist einen ersten Anschlussflansch auf, über den sie drehfest mit einer Abtriebswelle eines zu prüfenden Antriebsstrangs verbunden werden kann. Die Verbindung mit der Abtriebswelle des Antriebsstrangs kann auch eine mittelbare Verbindung beispielsweise über eine Radnabe eines Kraftfahrzeugs sein, an welcher üblicherweise ein Fahrzeugrad montiert ist und die drehfest auf der Abtriebswelle angeordnet ist. Wie bereits beschrieben, kann das Prüfrad somit anstelle eines gewöhnlichen Fahrzeugrads und wie ein gewöhnliches Fahrzeugrad montiert werden. Der erste Anschlussflansch ist dementsprechend vorteilhaft ein Flansch mit einem Anschlussbild, wie es eine herkömmliche Radfelge aufweist. Das Prüfrad kann dann über den ersten Anschlussflansch mittels herkömmliche Radbolzen an der Radnabe des Kraftfahrzeugs montiert werden.

Der erste Anschlussflansch umfasst somit eine Flanschfläche an der Radwelle des Prüfrads, eine Flanschfläche an der Radnabe des Kraftfahrzeugs sowie eine Anzahl Schrauben zum Herstellen der Flanschverbindung.

An der Radnabe des Prüfrads ist ein zweiter Anschlussflansch vorgesehen, der eine drehfeste Verbindung zu einer Antriebswelle des Antriebsstrangprüfstands ermöglicht. Der zweite Anschlussflansch ist dabei bevorzugt auf der dem ersten Anschlussflansch gegenüberliegenden Axialseite des Prüfrads angeordnet, d.h., dass sich im Prüfbetrieb die Abtriebswelle des Antriebsstrangs und die Antriebswelle des Antriebsstrangprüfstands auf gegenüberliegenden Axialseiten des Prüfrads gegenüberliegen. Die Antriebswelle kann somit über den zweiten Anschlussflansch ein Drehmoment und eine Drehzahl auf die Radnabe des Prüfrads übertragen, welche mit der Radwelle des Prüfrads drehfest verbunden ist. Das Drehmoment und die Drehzahl werden entsprechend auf die Radwelle übertragen, welche das Drehmoment und die Drehzahl ihrerseits über die erste Flanschverbindung in den zu prüfenden Antriebsstrang einleitet.

Zum Antrieb der Antriebswelle umfasst der Antriebsstrangprüfstand vorteilhaft einen Elektromotor. Elektromotoren sind vergleichsweise kompaktbauend, haben insbesondere im Vergleich zu Verbrennungsmotoren ein breites Drehzahlspektrum und weisen vorteilhaft über einen weiten Drehzahlbereich das maximale Drehmoment auf.

Besonders bevorzugt weist der zweite Anschlussflansch in der Radnabe des Prüfrads Schraubenöffnungen mit Innengewinde auf. Dadurch besteht nur eine einzelne Trennfuge, wenn der zweite Anschlussflansch verbunden ist, d.h., wenn die Antriebswelle mit der Radnabe verbunden ist.

Der zweite Anschlussflansch umfasst somit eine Flanschfläche an der Radnabe des Prüfrads, eine Flanschfläche an einem axialen Ende der Antriebswelle sowie eine Anzahl Schrauben zum Herstellen der Flanschverbindung.

Da die Radwelle und die Radnabe drehbar über die Radlagerung in der Radfelge gehalten sind, kann das Kraftfahrzeug, dessen Antriebsstrang geprüft wird, im Prüfbetrieb in Ruhe bleiben, d.h. ortsfest bleiben, da die Radfelge vom eingeleiteten Drehmoment und der eingeleiteten Drehzahl unbeeinflusst bleibt.

Erfindungsgemäß ist es nun vorgesehen, dass die Radnabe weiterhin dazu ausgebildet ist, über einen dritten Anschlussflansch drehfest mit der Blockiervorrichtung verbunden zu werden. Die Radnabe weist also neben dem zweiten Anschlussflansch mit dem dritten Anschlussflansch einen weiteren Anschlussflansch auf.

Indem die Radnabe über den dritten Anschlussflansch mit der Blockiervorrichtung verbunden werden kann und die Blockiervorrichtung wiederum drehfest mit der Radfelge verbunden ist, kann also über den dritten Anschlussflansch die Drehbarkeit der Radwelle und der Radnabe gegenüber der Radfelge blockiert werden. Ein auf die Radwelle oder Radnabe übertragenes Drehmoment bzw. eine übertragene Drehzahl werden somit auf die Radfelge übertragen und führen zu einer Rotation der Radfelge, was wiederum bei am Kraftfahrzeug montiertem Prüfrad eine entsprechende Translationsbewegung des Kraftfahrzeugs verursacht. Somit wird es also vorteilhaft möglich, dass das Kraftfahrzeug sich mit montiertem Prüfrad aus eigener Kraft bewegen kann, beispielsweise zu einer vorgesehenen Prüfposition in einer Prüfhalle.

Der dritte Anschlussflansch umfasst somit eine Flanschfläche an der Radnabe des Prüfrads, eine Flanschfläche an der Radfelge oder einem drehfest mit der Radfelge verbundenen Bauteils sowie eine Anzahl Schrauben zum Herstellen der Flanschverbindung.

Die Blockiervorrichtung ist also als Flanschverbindung ausgebildet, was zu dem weiteren Vorteil führt, dass sie gegenüber im Stand der Technik bekannten Blockiervorrichtungen axial vergleichsweise kurzbauend ist. Insbesondere ein Bewegungsvorgang des Kraftfahrzeugs mit montiertem Prüfrad kann dadurch vereinfacht werden, da keine seitlich vom Kraftfahrzeug weit abstehenden Teile vorhanden sind, die ein erhöhtes Maß an Aufmerksamkeit und Vorsicht vom Fahrer des Kraftfahrzeugs erfordern würden.

Beispielsweise kann im Rahmen eines Prüfvorgangs an einem ersten Ort eine Montage des Prüfrads am Kraftfahrzeug erfolgen, an einem zweiten Ort kann dann die eigentliche Prüfung des Antriebsstrangs des Kraftfahrzeugs erfolgen und an einem dritten Ort kann eine Demontage des Prüfrads erfolgen. Wenn die Radnabe über den dritten Anschlussflansch mit der Blockiervorrichtung drehfest verbunden ist, kann das Kraftfahrzeug sich jeweils aus eigener Kraft vom ersten Ort zum zweiten Ort und vom zweiten Ort zum dritten Ort bewegen, wodurch der Prüfablauf vereinfacht und beschleunigt wird.

Erfindungsgemäß ist es weiterhin vorgesehen, dass aufgrund der Anordnung des zweiten Anschlussflanschs und des dritten Anschlussflanschs der dritte Anschlussflansch nur verbindbar ist, wenn der zweite Anschlussflansch nicht verbunden ist. Dies wird sichergestellt, indem vorteilhaft der zweite Anschlussflansch und der dritte Anschlussflansch beide auf der Radnabe angeordnet sind und sich hinsichtlich ihrer Anschlussbilder unterscheiden. In anderen Worten sind der zweite Anschlussflansch und der dritte Anschlussflansch an der Radnabe überlagert angeordnet und weisen jeweils ein unterschiedliches Anschlussbild auf.

Unter einem Anschlussbild wird im Sinne der Erfindung dabei die Durchmesser und Tiefen der Schrauböffnungen verstanden, der Umfang, auf dem die

Schrauböffnungen angeordnet sind, der Abstand der Schrauböffnungen zueinander und die Anzahl der Schrauböffnungen. Die Schraubenöffnungen können z.B. als Durchgangsbohrungen ohne Gewinde oder als Sackbohrungen mit Gewinde ausgebildet sein.

Die Überlagerung des zweiten Anschlussflanschs und des dritten Anschlussflanschs ist derart, dass auch der zweite Anschlussflansch nur verbindbar ist, wenn der dritte Anschlussflansch nicht verbunden ist.

Wenn also der zweite Anschlussflansch mit der Antriebswelle verbunden ist, so sind vorteilhaft die Schrauböffnungen des dritten Anschlussflanschs durch die Antriebswelle derart verdeckt und nicht zugänglich, dass der dritte Anschlussflansch nicht verbunden werden kann. Wenn andersherum der dritte Anschlussflansch verbunden ist, d.h., wenn die Blockiervorrichtung aktiviert ist, so stehen beispielsweise Schraubenköpfe aus den Schrauböffnungen des dritten Anschlussflanschs axial nach außen vor, so dass wiederum die Antriebswelle nicht mit dem zweiten Anschlussflansch verbunden werden kann.

Die Erfindung verhindert somit durch geschickte Überlagerung der Anschlussbilder des zweiten Anschlussflanschs und des dritten Anschlussflanschs, dass der zweite und der dritte Anschlussflansch gleichzeitig verbunden werden können. Somit ist auf einfache Weise unmöglich gemacht, dass ein während des Prüfvorgangs in die Radnabe und Radwelle eingeleitetes Drehmoment auf die Radfelge übertragen wird und zu einer plötzlichen und ungewollten Translationsbewegung des Kraftfahrzeugs führt. Da die Blockiervorrichtung ein integraler Bestandteil des im Prüfbetrieb stillstehenden Bereichs des Prüfrads ist und nur durch eine Verschraubung des dritten Anschlussflansches aktiviert wird, ist zudem keine Montage weiterer Bauteile zum Blockieren der Verdrehbarkeit der Radfelge gegen die Radwelle und die Radnabe erforderlich. Somit wird auch nicht das Torsionsträgheitsmoment der Radwelle im Prüfbetrieb nachteilig erhöht.

Ein weiterer wesentlicher Vorteil der Erfindung ist darin zu sehen, dass der Prüfvorgang mittels des erfindungsgemäßen Prüfstands insbesondere auch die Fahrwerkseigenschaften des zu prüfenden Kraftfahrzeugs weitestgehend unbeeinflusst lässt, da das zu prüfende Kraftfahrzeug während des Prüfvorgangs ausschließlich über das Fahrwerk abgestützt ist. Somit können vorteilhaft fahrwerkespezifische Eigenschaften wie das Einfederungsverhalten, Lenkverhalten und ähnliche Eigenschaften realitätsnah geprüft werden.

Gemäß einer bevorzugten Ausführungsform der Erfindung ist es vorgesehen, dass Gewindebohrungen des zweiten Anschlussflanschs entweder einen größeren oder kleineren Durchmesser aufweisen als Gewindebohrungen des dritten Anschlussflanschs. Somit können Schrauben, welche zum Schließen des zweiten Anschlussflanschs dienen, nicht versehentlich in Gewindebohrungen des dritten Anschlussflanschs geschraubt werden und umgekehrt. Ein versehentliches Schließen der zweiten Flanschverbindung bzw. vor allem der dritten Flanschverbindung und damit einhergehend ein ungewolltes Aktivieren der Blockiervorrichtung können so ausgeschlossen werden.

Gemäß einer weiteren bevorzugten Ausführungsform der Erfindung ist es vorgesehen, dass die Radlagerung ein Radlager und ein Lagergehäuse umfasst, wobei das Radlager mittels einer Axialsicherung auf der Radnabe axial gesichert ist und mittels einer Anlagescheibe axial gegen das Lagergehäuse abgestützt ist. Die Axialsicherung verhindert dabei vorteilhaft ein axiales Verschieben des inneren Lagerrings und die Anlagescheibe reduziert ein Spiel des äußeren Lagerrings.

Bei dem Radlager handelt es sich bevorzugt um ein zweireihiges Schrägkugellager in O-Anordnung. Alternativ bevorzugt kann es sich auch um zwei einreihige Kugellager oder Schrägkugellager handeln.

Gemäß einer weiteren bevorzugten Ausführungsform der Erfindung ist es vorgesehen, dass das Lagergehäuse und/oder die Felge mindestens eine Öffnung aufweist, durch die mindestens eine Schraube des ersten Flanschanschlusses zugänglich ist. Daraus ergibt sich der Vorteil, dass das Prüfrad schnell und einfach auf der Radnabe des Kraftfahrzeugs montiert werden kann, insbesondere muss das Prüfrad für die Montage an der Radnabe nicht ganz oder teilweise selbst demontiert werden.

Gemäß einer weiteren bevorzugten Ausführungsform der Erfindung ist es vorgesehen, dass die Radfelge ein Felgenbett und eine Felgenscheibe umfasst, wobei das Felgenbett mit der Felgenscheibe verschraubt ist. Somit kann vorteilhaft ein Felgenbett einer herkömmlichen Fahrzeugfelge mit der Felgenscheibe verbunden werden, was wiederum die Verwendung von herkömmlichen, kostengünstigen und insbesondere auch im Straßenbetrieb des Kraftfahrzeugs zugelassenen Fahrzeugreifen erlaubt. Daraus ergibt sich auch ein besonders realitätsnahes Prüfungsverhalten des Antriebsstrangs während des Prüfvorgangs.

Gemäß einer besonders bevorzugten Ausführungsform der Erfindung ist es vorgesehen, dass das Felgenbett ein Felgenaußenbett und ein Felgeninnenbett umfasst, wobei das Felgenaußenbett und das Felgeninnenbett einzeln mit der Felgenscheibe verschraubt sind. Somit kann das Felgenbett sehr flexibel an verschiedene Reifentypen angepasst werden, insbesondere hinsichtlich Einpresstiefe und Reifenbreite.

Gemäß einer weiteren bevorzugten Ausführungsform der Erfindung ist es vorgesehen, dass die Radfelge ein Felgenbett und eine Felgenscheibe umfasst, wobei das Felgenbett und die Felgenscheibe einstückig ausgebildet sind. Dies erlaubt eine vergleichsweise kostengünstige Herstellung der Radfelge.

Gemäß einer weiteren bevorzugten Ausführungsform der Erfindung ist es vorgesehen, dass die Felgenscheibe und das Lagergehäuse einstückig ausgebildet sind. Auch dies ermöglicht eine vergleichsweise kostengünstige Herstellung des Prüfrads. Zudem kann der Montageaufwand beim Montieren des Prüfrads reduziert werden.

Gemäß einer weiteren bevorzugten Ausführungsform der Erfindung ist es vorgesehen, dass die Radfelge und das Lagergehäuse einstückig ausgebildet sind. In diesem Fall ist die Herstellung des Prüfrads besonders kostengünstig und der Montageaufwand besonders gering.

Gemäß einer weiteren bevorzugten Ausführungsform der Erfindung ist es vorgesehen, dass auf dem Felgenbett ein Luftreifen angeordnet ist. In diesem Fall ergibt sich ein Abstützverhalten des Prüfrads auf dem Untergrund, welches weitestgehend dem Abstützverhalten eines im normalen Fahrbetrieb des Kraftfahrzeugs auftretenden Abstützverhalten entspricht. Dadurch kann die Qualität der Prüfung verbessert werden, da das Verhalten des Antriebsstrangs in der Prüfungssituation noch näher am Verhalten des Antriebsstrangs im normalen Fahrbetrieb des Kraftfahrzeugs ist. Bevorzugt ist auf dem Prüfrad ein Luftreifen angeordnet, der auch im Straßenbetrieb des Kraftfahrzeugs zum Betrieb des Kraftfahrzeugs zulässig ist.

Gemäß einer alternativ bevorzugten Ausführungsform der Erfindung ist es vorgesehen, dass auf dem Felgenbett eine Gummibeschichtung angeordnet ist. Die Gummibeschichtung ermöglicht ebenfalls eine vergleichsweise realitätsnahe Abstützung des Prüfrads auf dem Untergrund, erfordert dabei allerdings im Gegensatz zum Luftreifen keine gesonderte Auswahl und Montage eines jeweils geeigneten Luftreifens auf dem Prüfrad. Stattdessen kann die Gummibeschichtung fest und dauerhaft auf dem Felgenbett angeordnet sein.

Gemäß der Erfindung ist es vorgesehen, dass die Blockiervorrichtung ein Hohlrad und ein Stirnrad umfasst, wobei das Stirnrad und das Hohlrad über eine Steckverzahnung drehfest miteinander verbunden sind, indem das Stirnrad im Hohlrad angeordnet ist, wobei das Stirnrad gegenüber dem Hohlrad innerhalb der Blockiervorrichtung axial verschiebbar ist ohne die Steckverzahnung außer Eingriff zu bringen und wobei das Stirnrad über eine Federkraftbeaufschlagung in eine axiale Anlage mit der Anlagescheibe gedrängt wird. Das Stirnrad und das Hohlrad stehen über die Steckverzahnung unabhängig vom Zustand der Blockiervorrichtung, d.h. unabhängig davon, ob die Blockiervorrichtung die Drehbarkeit der Radfelge gegen die Radnabe blockiert oder nicht, stets in Eingriff. Durch die axiale Verschiebbarkeit des Stirnrads im Hohlrad und die Federkraftbeaufschlagung des Stirnrads, so dass dieses in Anlage mit der Anlagescheibe gedrängt wird, besteht bei montierter Antriebswelle an die Radnabe über den zweiten Anschlussflansch ein Luftspalt zwischen dem axialen Ende des Stirnrads und der Radnabe, so dass das Stirnrad im Prüfbetrieb nicht an der Radnabe schleift.

Die Federkraftbeaufschlagung kann beispielsweise durch eine Sternfeder oder eine Schraubenfeder erfolgen.

Gemäß der Erfindung ist es vorgesehen, dass über den dritten Anschlussflansch das Stirnrad mit der Radnabe verbindbar ist. Wenn also der dritte Anschlussflansch geschlossen wird, so greifen die Schrauben der dritten Flanschverbindung vorteilhaft als Durchgangsbohrungen ausgebildete Schraubenöffnungen in der Radnabe in Gewindebohrungen im Stirnrad ein und ziehen das Stirnrad entgegen der Federkraftbeaufschlagung in Anlage mit der Radnabe, so dass eine kraft- und formschlüssige Verbindung entsteht.

Die Erfindung betrifft weiterhin einen Prüfstand für einen Antriebsstrang, umfassend mindestens ein erfindungsgemäßes Prüfrad.

Bevorzugt ist es vorgesehen, dass der Prüfstand für jedes antreibbare Rad des Kraftfahrzeugs bzw. des Antriebsstrangs jeweils ein erfindungsgemäßes Prüfrad sowie eine Radlastmaschine umfasst.

Nachfolgend wird die Erfindung anhand von in den Figuren dargestellten Ausführungsformen beispielhaft erläutert.

Es zeigen:
- Fig. 1: beispielhaft und schematisch eine mögliche Ausbildungsform eines Antriebsstrangprüfstands mit vier erfindungsgemäßen Prüfrädern,
- Fig. 2: beispielhaft und schematisch eine weitere mögliche Ausbildungsform eines Antriebsstrangprüfstands mit vier erfindungsgemäßen Prüfrädern,
- Fig. 3: beispielhaft und schematisch eine mögliche Ausbildungsform eines erfindungsgemäßen Prüfrads für einen Antriebsstrangprüfstand,
- Fig. 4: beispielhaft eine mögliche Ausbildungsform des Anschlussbilds des zweiten Anschlussflanschs und des Anschlussbilds des dritten Anschlussflanschs,
- Fig. 5: das Prüfrad der Fig. 3, jedoch ohne angeschlossene Gelenkwelle,
- Fig. 6: beispielhaft und ausschnittweise die Feder des Prüfrads der Fig. 3,
- Fig. 7: ebenfalls beispielhaft und ausschnittweise die Feder des Prüfrads der Fig. 3,
- Fig. 8: beispielhaft und schematisch eine weitere mögliche Ausbildungsform eines erfindungsgemäßen Prüfrads für einen Antriebsstrangprüfstand,
- Fig. 9: beispielhaft und schematisch eine weitere mögliche Ausbildungsform eines erfindungsgemäßen Prüfrads für einen Antriebsstrangprüfstand,
- Fig. 10: beispielhaft und schematisch eine weitere mögliche Ausbildungsform eines erfindungsgemäßen Prüfrads für einen Antriebsstrangprüfstand,
- Fig. 11: beispielhaft und schematisch eine weitere mögliche Ausbildungsform eines erfindungsgemäßen Prüfrads für einen Antriebsstrangprüfstand,
- Fig. 12: beispielhaft und schematisch eine weitere mögliche Ausbildungsform eines erfindungsgemäßen Prüfrads für einen Antriebsstrangprüfstand,
- Fig. 13.: beispielhaft und schematisch eine weitere mögliche Ausbildungsform eines erfindungsgemäßen Prüfrads für einen Antriebsstrangprüfstand,
- Fig. 14: beispielhaft und schematisch eine weitere mögliche Ausbildungsform eines erfindungsgemäßen Prüfrads für einen Antriebsstrangprüfstand und
- Fig. 15: beispielhaft und schematisch eine weitere mögliche Ausbildungsform eines erfindungsgemäßen Prüfrads für einen Antriebsstrangprüfstand.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

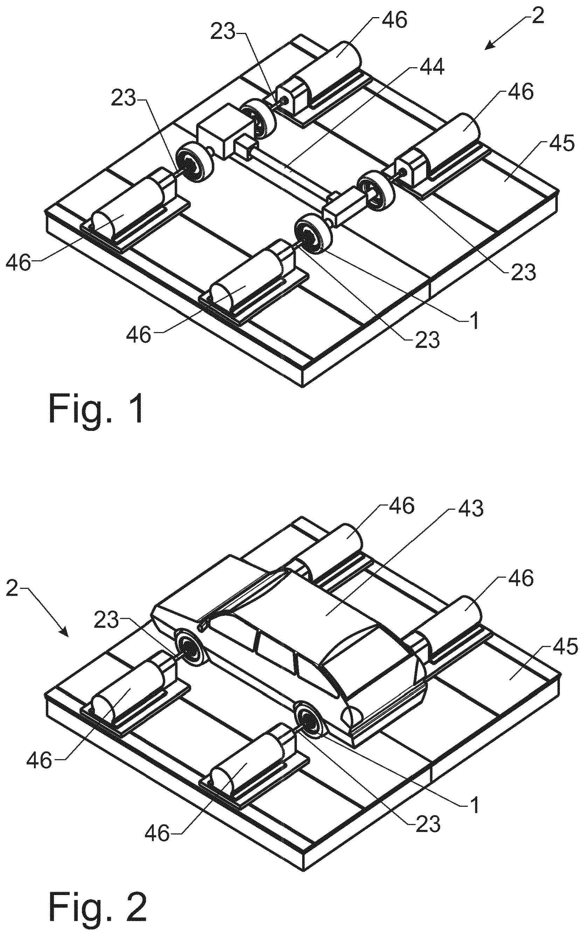

Fig. 1 zeigt beispielhaft und schematisch eine mögliche Ausbildungsform eines Antriebsstrangprüfstands 2 mit vier erfindungsgemäßen Prüfrädern 1. Mithilfe eines derartigen Antriebsstrangprüfstands 2 können unter anderem Funktion, Sicherheit, Wirkungsgrad und Lebensdauer der zum Antriebsstrang 44 gehörenden Fahrzeugkomponenten unter wiederholgenauen Lastbedingungen untersucht und erprobt werden. Dazu wird der Antriebsstrang 44, auf einem Prüfbett 45 befestigt. Der Antriebsstrang 44 ist mit vier erfindungsgemäßen Prüfrädern 1 versehen und über prüfstandseitige, als Gelenkwellen 23 ausgebildete Antriebswellen 23 mit vier Radlastmaschinen 46 zur Leistungsübertragung verbunden. Bei den Radlastmaschinen 46 handelt es sich beispielsgemäß um Elektromotoren 46. Jedes Prüfrad 1 ermöglicht dabei im Prüfbetrieb die Übertragung von Drehzahl und Drehmoment zwischen den Radnaben des Antriebsstrangs 44 und der Radlastmaschine 46. Ein radial äußerer Teil jedes Prüfrades 1, welcher beispielsgemäß aus dem Fahrzeugreifen 6 und der Prüfradfelge 7 besteht, besitzt aufgrund einer Radlagerung 8 gegenüber der Radwelle 10 ein Drehgelenk und damit einen rotatorischen Freiheitsgrad, wodurch der äußere Teil gegenüber der Radwelle 10 des Prüfrades 1 im Prüfbetrieb stillsteht. Das Gewicht des Antriebsstrangs 44 wird über die montierten Prüfräder 1 auf den Untergrund als Radlast übertragen. Durch den montierten Fahrzeugreifen 6 ergeben sich im Prüfbetrieb sehr ähnliche Radaufstandseigenschaften wie im Realbetrieb aufgrund der spezifischen Steifigkeit und Dämpfung des Fahrzeugreifens 6.

Fig. 2 zeigt beispielhaft und schematisch eine weitere mögliche Ausbildungsform eines Antriebsstrangprüfstands 2 mit vier erfindungsgemäßen Prüfrädern 1. Gemäß dem Ausführungsbeispiel der Fig. 2 ist jedoch anstelle nur eines Antriebsstrangs 44 ein vollständiges Kraftfahrzeug 43 im Prüfstand 2 angeordnet. Das Kraftfahrzeug 43 kann sich dabei prinzipiell aus eigener Kraft vorwärtsbewegen. Um diese Fähigkeit des Kraftfahrzeugs 43 auch für die Anordnung des Kraftfahrzeugs 43 im Prüfstand 2 nutzbar zu machen, weisen die am Kraftfahrzeug 43 montierten Prüfräder 1 jeweils eine Blockiervorrichtung 9 auf, mittels der ein Verdrehen des radial äußeren Teils des Prüfrads 1 gegen die Radwelle 10 des Prüfrads 1 blockiert werden kann. Somit kann sich das Kraftfahrzeug 43 auf den Prüfrädern 1 wie auf gewöhnlichen Fahrzeugrädern bewegen.

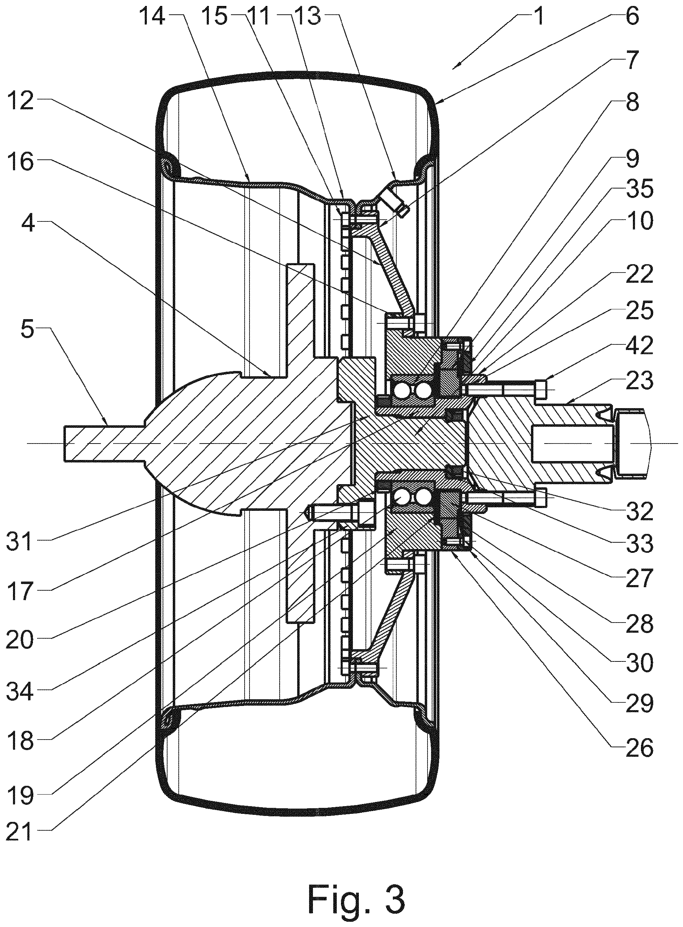

Fig. 3 zeigt beispielhaft und schematisch eine mögliche Ausbildungsform eines erfindungsgemäßen Prüfrads 1 für einen Antriebsstrangprüfstand 2. Das Prüfrad 1 kann dabei an einer Radnabe 4 des Kraftfahrzeuges 43 oder des Antriebsstrangs 44 befestigt werden.

Das Prüfrad 1 besteht beispielsgemäß aus einem Fahrzeugreifen 6, einer Prüfradfelge 7, einer Radlagerung 8, einer Blockiervorrichtung 9, einer Radwelle 10 und einer Radnabe 17.

Die Prüfradfelge 7 setzt sich zusammen aus einem Felgenbett 11 und einer Felgenscheibe 12. Das Felgenbett 11 kann seinerseits mehrteilig ausgeführt sein und sich aus einem Felgenaußenbett 13 und einem Felgeninnenbett 14 zusammensetzen. Das Felgenaußenbett 13, das Felgeninnenbett 14 und die Felgenscheibe 12 sind dabei drehfest durch eine Verschraubung 15 miteinander verbunden. Die Verschraubung 15 erfolgt beispielsgemäß aus Richtung des Felgeninnenbetts 14. Alternativ ist es auch denkbar, dass die Verschraubung 15 aus Richtung des Felgenaußenbetts 13 erfolgt. Die Prüfradfelge 7 ist mit der Radlagerung 8 durch eine Verschraubung 16 drehfest verbunden.

Die Radlagerung 8 setzt sich ihrerseits zusammen aus der Radnabe 17, dem Radlager 18 und dem Lagergehäuse 19. Das Radlager 18 kann aus einem oder mehreren Lagern bestehen und ist auf der Radnabe 17 mit einer Axialsicherung 20 befestigt. Das Radlager 18 wird im Lagergehäuse 19 außerdem durch eine Anlagescheibe 21 axial gesichert. Das Radlager 18 besteht beispielsgemäß aus einem zweireihigen Schrägkugellager in O-Anordnung.

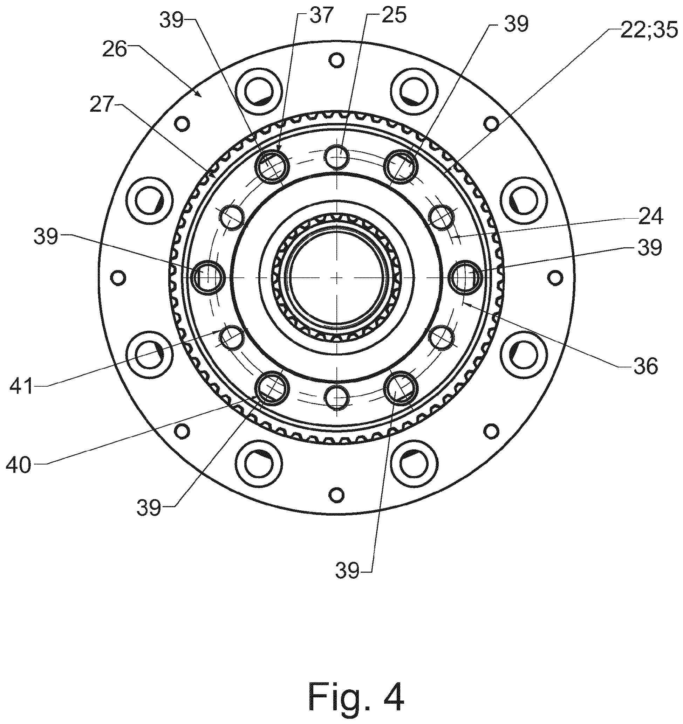

Die Radnabe 17 besitzt einen zweiten Anschlussflansch 22 zum Befestigen einer prüfstandseitigen Gelenkwelle 23. Das Anschlussbild 24 (siehe Fig. 4) am Anschlussflansch 22 weist dafür Gewindebohrungen 25 auf.

Die Blockiervorrichtung 9 besteht aus einem innenverzahnten Hohlrad 26 mit Zähnezahl N, welches mit einem außenverzahnten Stirnrad 27 mit ebenfalls der Zähnezahl N in Eingriff steht und dadurch drehfest mit diesem verbunden ist. Das Stirnrad 27 kann gegenüber dem Hohlrad 26 eine axiale Relativbewegung ausführen. Durch eine Feder 28 wird das Stirnrad 27 gegenüber dem Hohlrad 26 in axiale Anlage mit der Anlagescheibe 21 gebracht. Die Feder 28 stützt sich dabei im Deckel 29 ab. Der Deckel 29 ist beispielsgemäß am Hohlrad 26 durch eine Verschraubung 30 befestigt. Die Blockiervorrichtung 9 ist mit der Radlagerung 8 drehfest verbunden.

Die Radwelle 10 ist mit der Radnabe 17 der Radlagerung 8 durch eine Steckverzahnung formschlüssig verbunden. Die Radnabe 17 ist gegenüber der Radwelle 10 zudem mithilfe einer Axialsicherung 32 gegen eine axiale Relativbewegung gesichert. Die Axialsicherung 32 ist beispielsgemäß durch eine Anlagescheibe 33 ergänzt. Die Radwelle 10 ist mit der Radnabe 4 des Kraftfahrzeugs 43 oder des Antriebsstrangs 44 durch einen ersten Anschlussflansch 34 drehfest verbunden.

Für eine Blockierung der Radlagerung 8 und somit zur Übertragung von Drehmoment und Drehzahl des Kraftfahrzeugs 43 oder Antriebsstrangs 44 auf die Prüfradfelge 7, kann das Stirnrad 27 der Blockiervorrichtung 9 mit dem dritten Anschlussflansch 35 der Radnabe 17 durch eine Verschraubung (nicht dargestellt in Fig. 3) kraftschlüssig und damit drehfest miteinander verbunden werden. Der zweite Anschlussflansch 22 und der dritte Anschlussflansch 35 sind dabei überlagert angeordnet und weisen jeweils ein unterschiedliches Anschlussbild 24, 36 (siehe Fig. 4) auf. Die Anschlussbilder des zweiten Anschlussflanschs 22 und des dritten Anschlussflanschs 35 unterscheiden sich beispielsgemäß durch die Durchmesser ihrer Bohrungen.

Beim Verbinden des dritten Anschlussflanschs 35 rückt das Stirnrad 27 von seiner axialen Anlage mit der Anlagescheibe 21 in eine axiale Anlage mit dem Anschlussflansch 22 der Radnabe 17.

Das Anschlussbild 36 im Anschlussflansch 22 ist als Durchgangsbohrung 37 ausgeführt. Das Anschlussbild 36 im Stirnrad 27 ist als Gewindebohrungen 39 ausgeführt, wobei die Gewindebohrungen 39 des dritten Anschlussflanschs 35 im Stirnrad 27 einen größeren Innendurchmesser 40 aufweisen als die Außendurchmesser 41 der Gewindebohrungen 25 im zweiten Anschlussflansch 22. Damit wird ein unbeabsichtigtes Blockieren der Blockiervorrichtung 9 bei Montage der Gelenkwelle 23 in jedem Fall verhindert, da die Schrauben 42 des zweiten Anschlussflanschs 22 nicht in die Gewindebohrungen 39 des dritten Anschlussflanschs 35 greifen können.

Fig. 4 zeigt beispielhaft eine mögliche Ausbildungsform des Anschlussbilds 24 des zweiten Anschlussflanschs 22 und des Anschlussbilds 36 des dritten Anschlussflanschs 35. Wie zu sehen ist, weisen beide Anschlussbilder 24, 36 jeweils sechs GewindeBohrungen 25, 39 auf, wobei die Gewindebohrungen 39 des dritten Anschlussflanschs 35 einen größeren Innendurchmesser 40 aufweisen als die Gewindebohrungen 25 des zweiten Anschlussflanschs 22 mit ihrem Außendurchmesser 41.

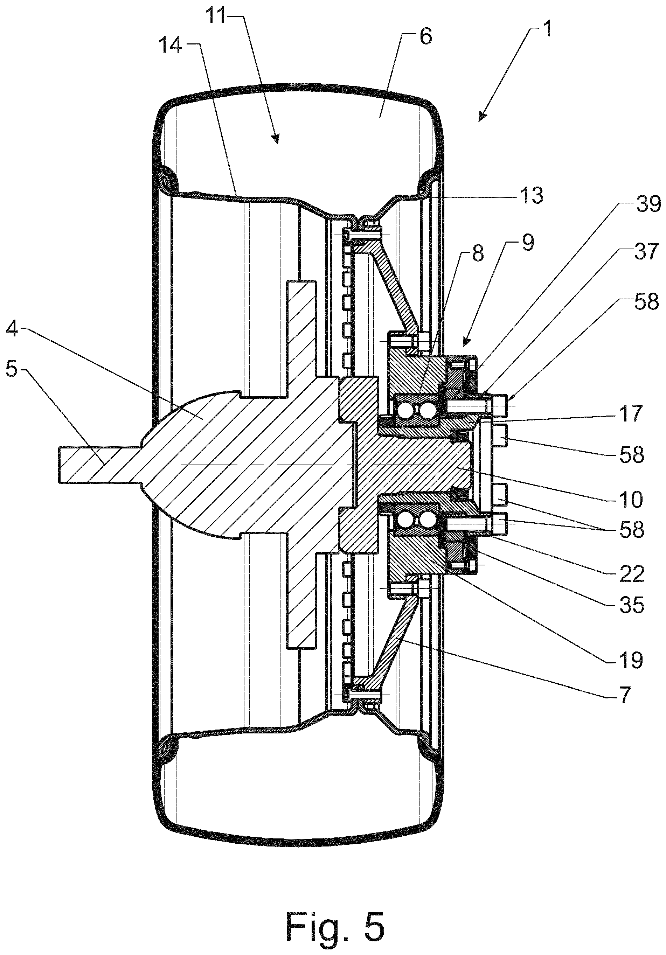

Fig. 5 zeigt das Prüfrad der Fig. 3, jedoch ohne angeschlossene Gelenkwelle 23, d.h. ohne geschlossene Verbindung über den zweiten Anschlussflansch 22. Stattdessen ist gemäß Fig. 5 der dritte Anschlussflansch 35 geschlossen. Dazu sind Schrauben 58 in den Gewindebohrungen 39 des Anschlussbilds 36 montiert und durch die Durchgangsbohrungen 37 geführt. Durch die Schraubenköpfe der Schrauben 58 kann in diesem Zustand keine Gelenkwelle 23 montiert werden.

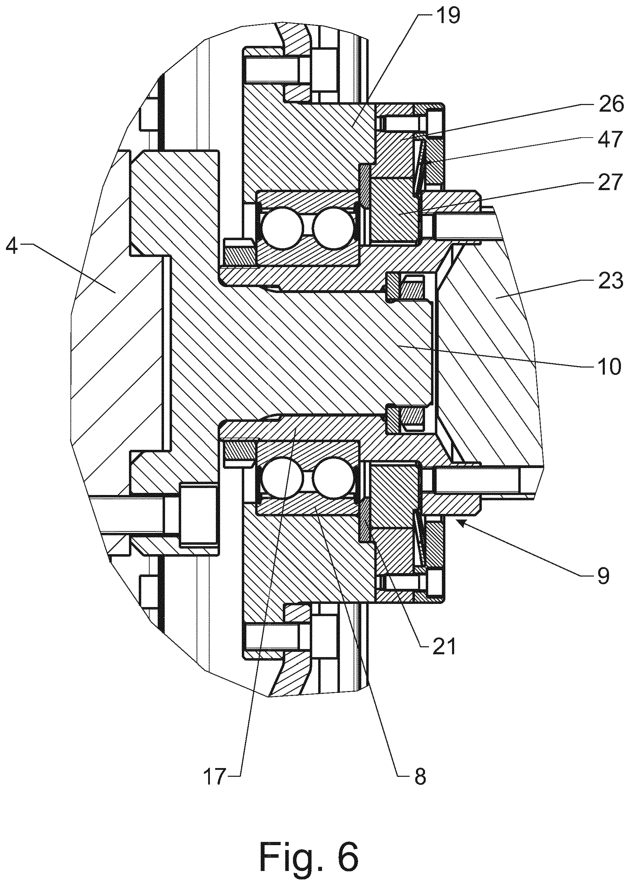

Fig. 6 zeigt beispielhaft und ausschnittweise die Feder 28 des Prüfrads 1 der Fig. 3, wobei die Feder 28 der Fig. 6 beispielsgemäß als Sternfeder 47 ausgebildet ist.

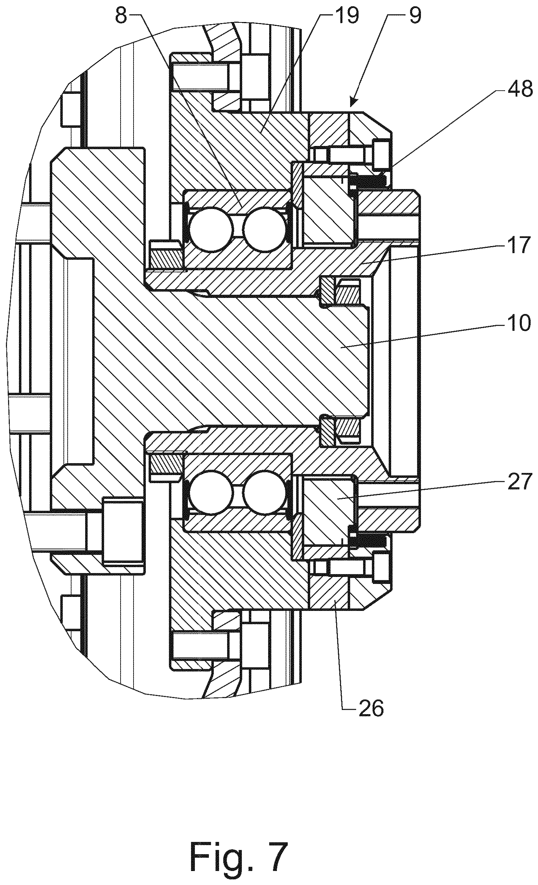

Fig. 7 zeigt ebenfalls beispielhaft und ausschnittweise die Feder 28 des Prüfrads 1 der Fig. 3, wobei die Feder 28 der Fig. 7 beispielsgemäß als eine von mehreren Schraubenfedern 48 ausgebildet ist.

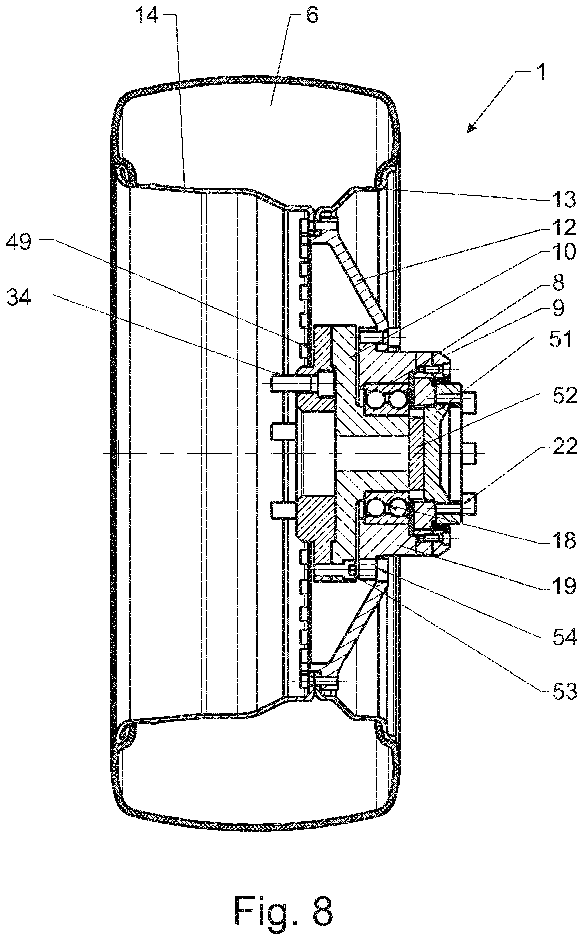

Fig. 8 zeigt beispielhaft und schematisch eine weitere mögliche Ausbildungsform eines erfindungsgemäßen Prüfrads 1 für einen Antriebsstrangprüfstand 2. Das Prüfrad 1 der Fig. 8 unterscheidet sich vom Prüfrad 1 der Fig. 3 durch die Ausbildungsform der Radwelle 10. Diese ist auch gemäß Fig. 8 über den ersten Anschlussflansch 34 mit der Radnabe 4 (in Fig. 8 nicht dargestellt) drehfest verbindbar. Die Radwelle 10 ist in diesem Fall jedoch zweiteilig, sie umfasst nämlich weiterhin den Flansch 49.

Die Radwelle 10 ist dabei durch eine Verschraubung 53 mit dem Flansch 49 drehfest verbunden. Die Verschraubung 53 ist durch eine Öffnung 54 innerhalb des Lagergehäuses 19 und der Felgenscheibe 12 montierbar.

Die Radwelle 10 ist mit der Radnabe 17 formschlüssig drehfest verbunden durch eine Passfeder 52. Die Radnabe 17 ist zusätzlich kraftschlüssig mit der Radwelle 10 axial verbunden.

Das Radlager 18 ist auf der Radwelle 10 befestigt und durch die Radnabe 17 axial gesichert. Die Radnabe 17 ist über den zweiten Anschlussflansch 22 mit einer Gelenkwelle 23 (in Fig. 8 nicht dargestellt) verbindbar.

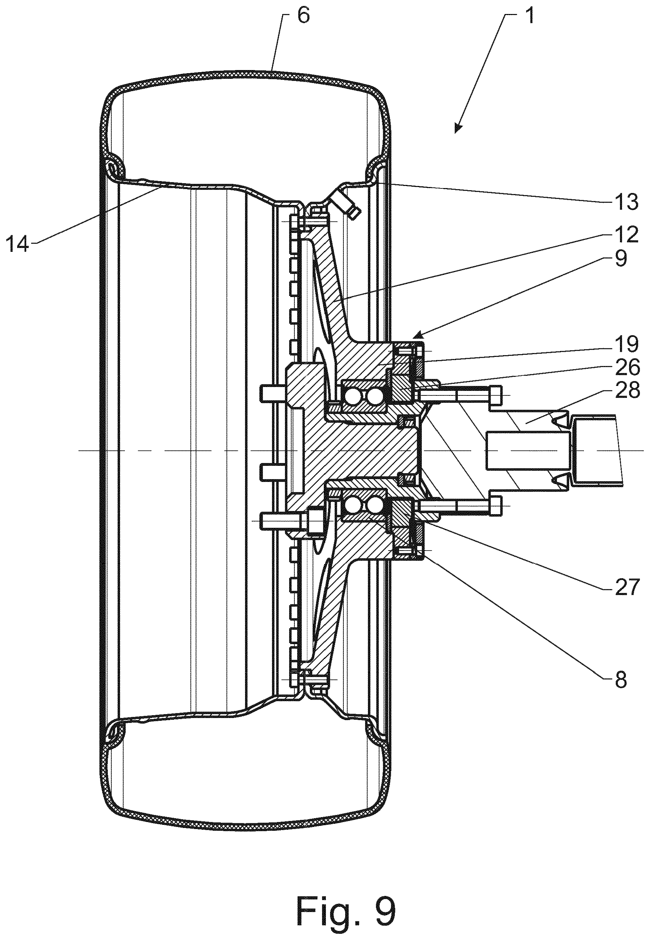

Fig. 9 zeigt beispielhaft und schematisch eine weitere mögliche Ausbildungsform eines erfindungsgemäßen Prüfrads 1 für einen Antriebsstrangprüfstand 2. Gemäß Fig. 9 sind das Lagergehäuse 19 und die Felgenscheibe 12 einstückig ausgebildet.

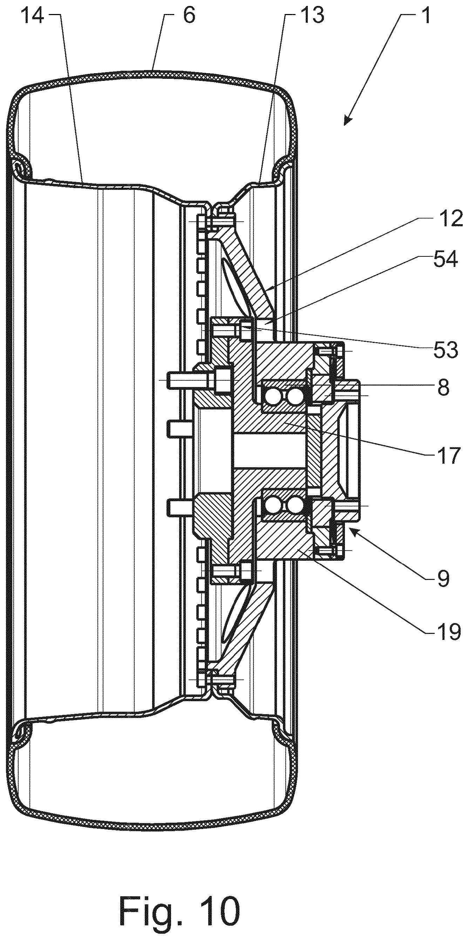

Fig. 10 zeigt beispielhaft und schematisch eine weitere mögliche Ausbildungsform eines erfindungsgemäßen Prüfrads 1 für einen Antriebsstrangprüfstand 2. Gemäß Fig. 10 sind das Lagergehäuse 19 und die Felgenscheibe 12 wiederum einstückig ausgebildet, jedoch weist das Lagergehäuse 19 eine Öffnung 54 auf, durch welche die Schrauben 53 zugänglich sind.

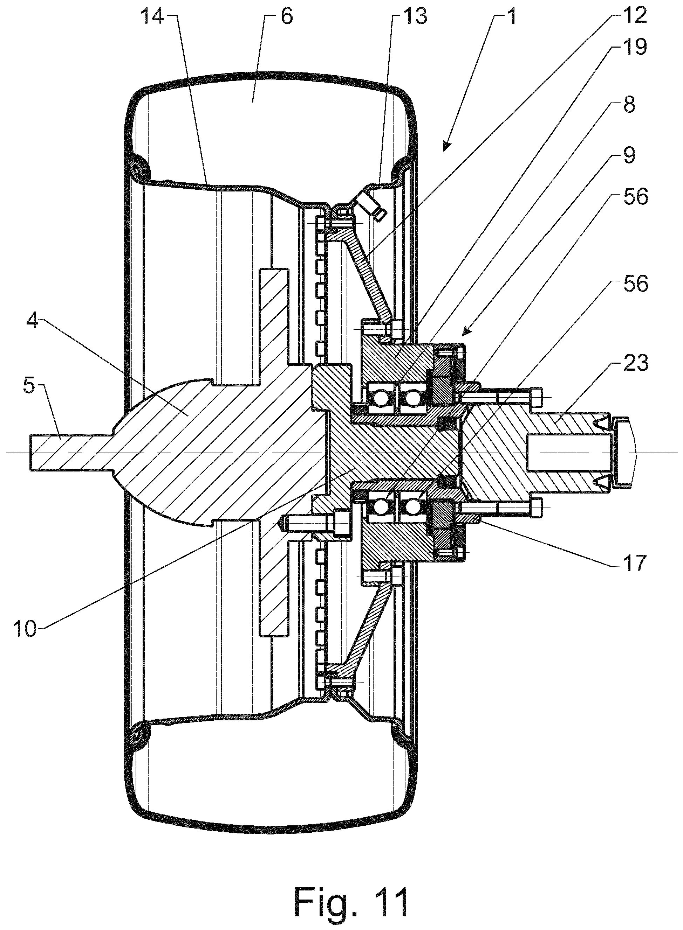

Fig. 11 zeigt beispielhaft und schematisch eine weitere mögliche Ausbildungsform eines erfindungsgemäßen Prüfrads 1 für einen Antriebsstrangprüfstand 2. Das Prüfrad 1 der Fig. 11 unterscheidet sich dabei vom Prüfrad 1 der Fig 3 durch die Ausbildung der Lagerung 8 als zwei einreihige Kugellager 56.

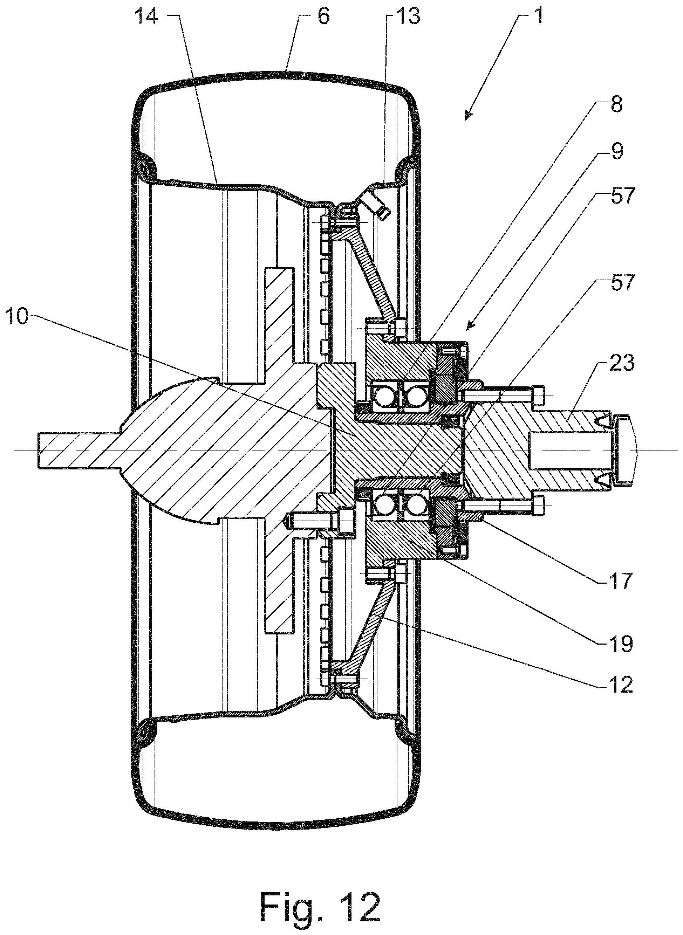

Fig. 12 zeigt beispielhaft und schematisch eine weitere mögliche Ausbildungsform eines erfindungsgemäßen Prüfrads 1 für einen Antriebsstrangprüfstand 2. Das Prüfrad 1 der Fig. 12 unterscheidet sich dabei vom Prüfrad 1 der Fig. 3 durch die Ausbildung der Lagerung 8 als zwei einreihige Schrägkugellager 57.

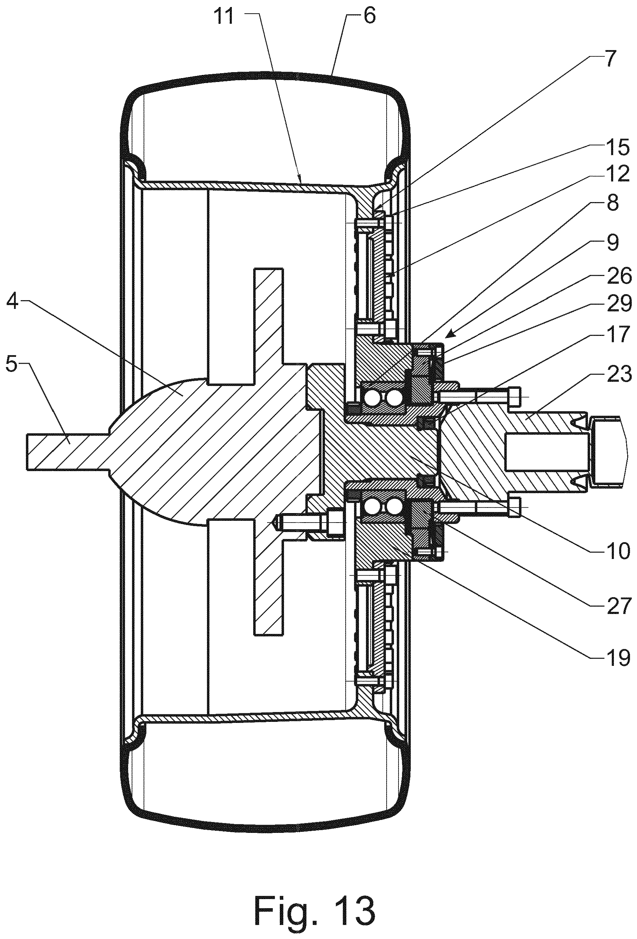

Fig. 13 zeigt beispielhaft und schematisch eine weitere mögliche Ausbildungsform eines erfindungsgemäßen Prüfrads 1 für einen Antriebsstrangprüfstand 2. Das Prüfrad 1 der Fig. 13 unterscheidet sich dabei vom Prüfrad 1 der Fig. 3 durch das Felgenbett 11, welches beispielsgemäß einstückig ausgebildet ist.

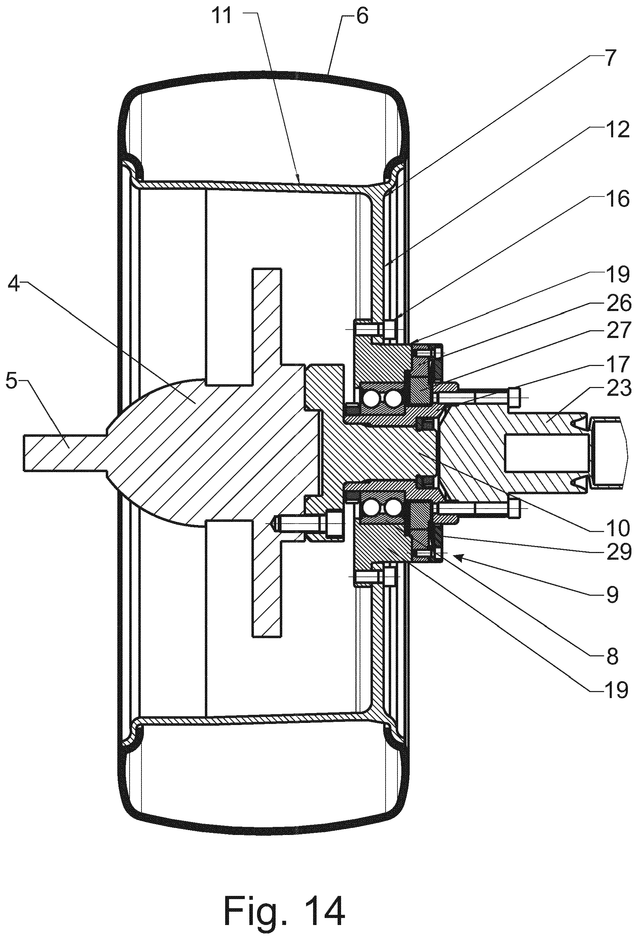

Fig. 14 zeigt beispielhaft und schematisch eine weitere mögliche Ausbildungsform eines erfindungsgemäßen Prüfrads 1 für einen Antriebsstrangprüfstand 2. Das Prüfrad 1 der Fig. 14 unterscheidet sich dabei vom Prüfrad 1 der Fig. 13 dadurch, dass das Felgenbett 11 und die Felgenscheibe 12 einstückig ausgebildet sind.

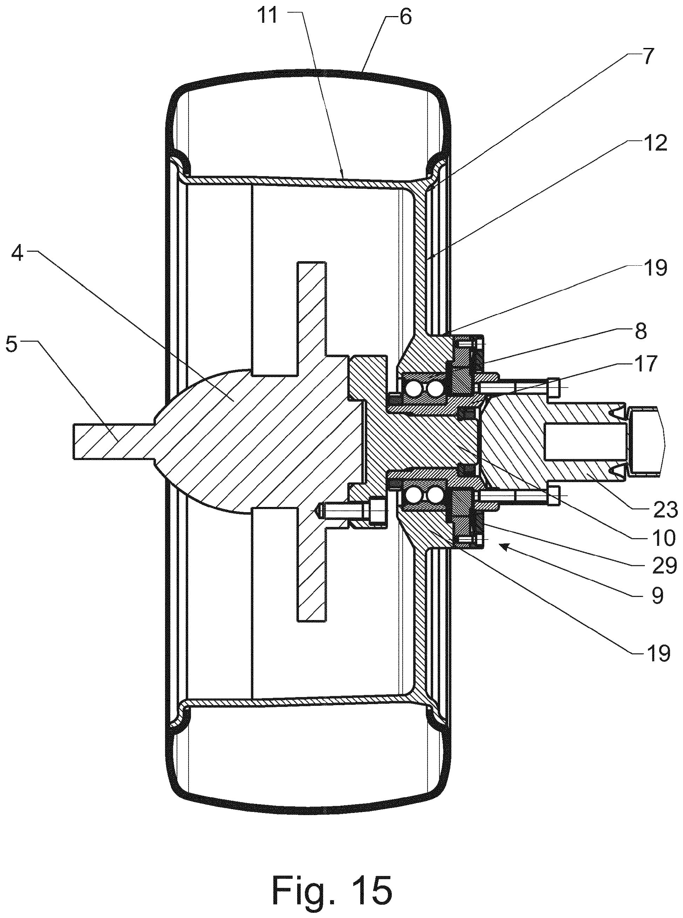

Fig. 15 zeigt beispielhaft und schematisch eine weitere mögliche Ausbildungsform eines erfindungsgemäßen Prüfrads 1 für einen Antriebsstrangprüfstand 2. Das Prüfrad 1 der Fig. 15 unterscheidet sich dabei vom Prüfrad 1 der Fig. 13 dadurch, dass das Felgenbett 11, die Felgenscheibe 12 und das Lagergehäuse 19 einstückig ausgebildet sind.

### Bezugszeichen

- 1: Prüfrad
- 2: Antriebsstrangprüfstand
- 4: Radnabe des Kraftfahrzeugs
- 5: Abtriebswelle des Kraftfahrzeugs
- 6: Fahrzeugreifen
- 7: Prüfradfelge
- 8: Radlagerung
- 9: Blockiervorrichtung
- 10: Radwelle
- 11: Felgenbett
- 12: Felgenscheibe
- 13: Felgenaußenbett
- 14: Felgeninnenbett
- 15: Verschraubung
- 16: Verschraubung
- 17: Radnabe
- 18: Radlager
- 19: Lagergehäuse
- 20: Axialsicherung
- 21: Anlagescheibe
- 22: zweiter Anschlussflansch
- 23: Antriebswelle, Gelenkwelle
- 24: Anschlussbild
- 25: Gewindebohrungen
- 26: Hohlrad
- 27: Stirnrad
- 28: Feder
- 29: Deckel
- 30: Verschraubung
- 32: Axialsicherung
- 33: Anlagescheibe
- 34: erster Anschlussflansch
- 35: dritter Anschlussflansch
- 36: Anschlussbild
- 37: Durchgangsbohrungen
- 39: Gewindebohrungen
- 40: Innendurchmesser
- 41: Außendurchmesser
- 42: Verschraubung
- 43: Kraftfahrzeug
- 44: Antriebsstrang
- 45: Prüfbett
- 46: Radlastmaschine
- 47: Sternfeder
- 48: Spiralfeder
- 49: Flansch
- 52: Passfeder
- 53: Verschraubung
- 54: Öffnung
- 56: Einreihiges Kugellager
- 57: Einreihiges Schrägkugellager
- 58: Schraube

## Patentansprüche

1. Prüfrad (1) für einen Antriebsstrangprüfstand (2),
umfassend eine Radfelge (7), eine Radlagerung (8), eine Blockiervorrichtung (9), eine Radwelle (10) und eine Radnabe (17),
wobei die Radnabe (17) drehfest auf der Radwelle (10) angeordnet ist,
wobei die Radwelle (10) und die Radnabe (17) über die Radlagerung (8) drehbar in der Radfelge (7) gehalten sind,
wobei die Blockiervorrichtung (9) drehfest mit der Radfelge (7) verbunden ist, wobei die Radwelle (10) dazu ausgebildet ist, über einen ersten Anschlussflansch (34) drehfest mit einer Abtriebswelle (5) eines zu prüfenden Antriebsstrangs (44) verbunden zu werden,
wobei die Radnabe (17) dazu ausgebildet ist, über einen zweiten Anschlussflansch (22) drehfest mit einer Antriebswelle (23) des Antriebsstrangprüfstands (2) verbunden zu werden,
wobei die Blockiervorrichtung (9) aus einem innenverzahnten Hohlrad (26) mit Zähnezahl N, welches mit einem außenverzahnten Stirnrad (27) mit ebenfalls der Zähnezahl N in Eingriff steht und dadurch drehfest mit diesem verbunden ist, besteht, wobei das Stirnrad (27) gegenüber dem Hohlrad (26) eine axiale Relativbewegung ausführen kann, wobei durch eine Feder (28) das Stirnrad 27 gegenüber dem Hohlrad 26 in axiale Anlage mit einer Anlagescheibe (21) bringbar ist, **dadurch gekennzeichnet, dass** die Feder (28) sich in einem Deckel (29) abstützt, wobei der Deckel (29) am Hohlrad (26) durch eine Verschraubung (30) befestigt ist und wobei die Blockiervorrichtung (9) mit der Radlagerung (8) drehfest verbunden ist,
wobei die Radnabe (17) weiterhin dazu ausgebildet ist, über einen dritten Anschlussflansch (35) drehfest mit der Blockiervorrichtung (9) verbunden zu werden, so dass eine Verdrehbarkeit der Radwelle (10) gegenüber der Radfelge (7) blockiert ist, wobei der dritte Anschlussflansch (35) nur verbindbar ist, wenn der zweite Anschlussflansch (22) nicht verbunden ist,
wobei es weiterhin vorgesehen ist, dass aufgrund der Anordnung des zweiten Anschlussflanschs (22) und des dritten Anschlussflanschs (35) der dritte Anschlussflansch (35) nur verbindbar ist, wenn der zweite Anschlussflansch (22) nicht verbunden ist, wobei dies sichergestellt ist, indem der zweite Anschlussflansch (22) und der dritte Anschlussflansch (35) beide auf der Radnabe (17) angeordnet sind und sich hinsichtlich ihrer Anschlussbilder unterscheiden,
wobei für eine Blockierung der Radlagerung (8) und somit zur Übertragung von Drehmoment und Drehzahl eines Kraftfahrzeugs (43) oder Antriebsstrangs (44) auf die Prüfradfelge (7) das Stirnrad (27) der Blockiervorrichtung (9) mit dem dritten Anschlussflansch (35) der Radnabe (17) durch eine Verschraubung kraftschlüssig und damit drehfest verbunden werden kann, wobei der zweite Anschlussflansch (22) und der dritte Anschlussflansch (35) dabei überlagert angeordnet sind und jeweils ein unterschiedliches Anschlussbild (24, 36) aufweisen und wobei beim Verbinden des dritten Anschlussflanschs (35) das Stirnrad (27) von seiner axialen Anlage mit der Anlagescheibe (21) in eine axiale Anlage mit dem Anschlussflansch (22) der Radnabe (17) rückt.

2. Prüfrad (1) nach Anspruch 1, **dadurch gekennzeichnet, dass** Gewindebohrungen (25) des zweiten Anschlussflanschs (22) einen kleineren Durchmesser aufweisen als Gewindebohrungen (39) des dritten Anschlussflanschs (35).

3. Prüfrad (1) nach mindestens einem der Ansprüche 1 bis 2, **dadurch gekennzeichnet, dass** die Radlagerung (8) ein Radlager (18) und ein Lagergehäuse (19) umfasst, wobei das Radlager (18) mittels einer Axialsicherung (20) auf der Radnabe (17) axial gesichert ist und mittels einer Anlagescheibe (21) axial gegen das Lagergehäuse (19) abgestützt ist.

4. Prüfrad (1) nach mindestens einem der Ansprüche 1 bis 3, **dadurch gekennzeichnet, dass** die Radwelle (10) und die Radnabe (17) drehfest über eine Steckverzahnung verbunden sind, wobei die Radnabe (17) gegenüber der Radwelle (10) mittels einer Axialsicherung (32) auf der Radwelle (17) axial gesichert ist.

5. Prüfrad (1) nach mindestens einem der Ansprüche 1 bis 4, **dadurch gekennzeichnet, dass** die Radwelle (10) und die Radnabe (17) drehfest über eine Passfeder (52) verbunden sind.

6. Prüfrad (1) nach Anspruch 3, **dadurch gekennzeichnet, dass** das Lagergehäuse (19) und/oder die Felge (7) mindestens eine Öffnung (54) aufweist, durch die mindestens eine Schraube (58) des ersten Flanschanschlusses (34) zugänglich ist.

7. Prüfrad (1) nach mindestens einem der Ansprüche 1 bis 6, **dadurch gekennzeichnet, dass** die Radfelge (7) ein Felgenbett (11) und eine Felgenscheibe (12) umfasst, wobei das Felgenbett (11) mit der Felgenscheibe (12) verschraubt ist.

8. Prüfrad (1) nach mindestens einem der Ansprüche 1 bis 6, **dadurch gekennzeichnet, dass** die Radfelge (7) ein Felgenbett (11) und eine Felgenscheibe (12) umfasst, wobei das Felgenbett (11) und die Felgenscheibe (12) einstückig ausgebildet sind.

9. Prüfrad (1) nach mindestens einem der Ansprüche 1 bis 8, **dadurch gekennzeichnet, dass** das Felgenbett (11) ein Felgenaußenbett (13) und ein Felgeninnenbett (14) umfasst, wobei das Felgenaußenbett (13) und das Felgeninnenbett (14) einzeln mit der Felgenscheibe (11) verschraubt sind.

10. Prüfrad (1) nach Anspruch 3, **dadurch gekennzeichnet, dass** die Felgenscheibe (12) und das Lagergehäuse (19) einstückig ausgebildet sind.

11. Prüfrad (1) nach Anspruch 3, **dadurch gekennzeichnet, dass** die Radfelge (7) und das Lagergehäuse (19) einstückig ausgebildet sind.

12. Antriebsstrangprüfstand (2) für einen Antriebsstrang, umfassend mindestens ein Prüfrad (1) nach mindestens einem der Ansprüche 1 bis 11.

## Claims

1. Test wheel (1) for a drive train test bench (2), comprising a wheel rim (7), a wheel bearing system (8), a blocking device (9), a wheel shaft (10) and a wheel hub (17),
wherein the wheel hub (17) is arranged for conjoint rotation on the wheel shaft (10),
wherein the wheel shaft (10) and the wheel hub (17) are held rotatably in the wheel rim (7) via the wheel bearing system (8),
wherein the blocking device (9) is connected for conjoint rotation to the wheel rim (7), wherein the wheel shaft (10) is designed to be connected for conjoint rotation via a first connection flange (34) to an output shaft (5) of a drive train (44) to be tested,
wherein the wheel hub (17) is designed to be connected for conjoint rotation to a drive shaft (23) of the drive train test bench (2) via a second connection flange (22), wherein the blocking device (9) consists of an internally toothed ring gear (26) having a number of teeth N, which ring gear is in engagement with an externally toothed spur gear (27) likewise having the number of teeth N and is thus connected to the latter for conjoint rotation, wherein the spur gear (27) can carry out an axial relative movement with respect to the ring gear (26), wherein the spur gear 27 can be brought into axial contact with a bearing disc (21) with respect to the ring gear 26 by means of a spring (28), **characterized in that** the spring (28) is supported in a cover (29), wherein the cover (29) is fastened to the ring gear (26) by means of a screw connection (30), and wherein the blocking device (9) is connected for conjoint rotation to the wheel bearing system (8),
wherein the wheel hub (17) is furthermore designed to be connected for conjoint rotation to the blocking device (9) via a third connection flange (35), such that rotatability of the wheel shaft (10) with respect to the wheel rim (7) is blocked, wherein the third connection flange (35) can only be connected if the second connection flange (22) is not connected,
wherein provision is furthermore made whereby, owing to the arrangement of the second connection flange (22) and of the third connection flange (35), the third connection flange (35) is only connectable, if the second connection flange (22) is not connected, wherein this is ensured **in that** the second connection flange (22) and the third connection flange (35) are both arranged on the wheel hub (17) and differ in terms of their connection patterns,
wherein, for a blocking of the wheel bearing system (8) and thus for the transmission of torque and rotational speed of a motor vehicle (43) or drive train (44) to the test wheel rim (7), the spur gear (27) of the blocking device (9) can be connected to the third connection flange (35) of the wheel hub (17) in a frictionally engaged manner and therefore for conjoint rotation, wherein the second connection flange (22) and the third connection flange (35) are in this case arranged so as to be superimposed and in each case have a different connection pattern (24, 36), and wherein, when the third connection flange (35) is connected, the spur gear (27) moves from its axial abutment with the bearing disc (21) into an axial abutment with the connection flange (22) of the wheel hub (17).

2. Test wheel (1) according to Claim 1,
**characterized in that** threaded bores (25) of the second connection flange (22) have a smaller diameter than threaded bores (39) of the third connection flange (35).

3. Test wheel (1) according to at least one of Claims 1 to 2,
**characterized in that** the wheel bearing system (8) comprises a wheel bearing (18) and a bearing housing (19), wherein the wheel bearing (18) is axially secured on the wheel hub (17) by means of an axial securing means (20) and is axially supported against the bearing housing (19) by means of a bearing disc (21).

4. Test wheel (1) according to at least one of Claims 1 to 3,
**characterized in that** the wheel shaft (10) and the wheel hub (17) are connected for conjoint rotation via a spline toothing, wherein the wheel hub (17) is axially secured on the wheel shaft (17) in relation to the wheel shaft (10) by an axial securing means (32).

5. Test wheel (1) according to at least one of Claims 1 to 4,
**characterized in that** the wheel shaft (10) and the wheel hub (17) are connected for conjoint rotation via a feather key (52).

6. Test wheel (1) according to Claim 3,
**characterized in that** the bearing housing (19) and/or the rim (7) has at least one opening (54) through which at least one screw (58) of the first flange connection (34) is accessible.

7. Test wheel (1) according to at least one of Claims 1 to 6,
**characterized in that** the wheel rim (7) comprises a rim well (11) and a rim disc (12), wherein the rim well (11) is screwed to the rim disc (12).

8. Test wheel (1) according to at least one of Claims 1 to 6,
**characterized in that** the wheel rim (7) comprises a rim well (11) and a rim disc (12), wherein the rim well (11) and the rim disc (12) are formed in one piece.

9. Test wheel (1) according to at least one of Claims 1 to 8,
**characterized in that** the rim well (11) comprises a rim outer well (13) and a rim inner well (14), wherein the rim outer well (13) and the rim inner well (14) are screwed individually to the rim disc (11).

10. Test wheel (1) according to Claim 3,
**characterized in that** the rim disc (12) and the bearing housing (19) are formed in one piece.

11. Test wheel (1) according to Claim 3,
**characterized in that** the wheel rim (7) and the bearing housing (19) are formed in one piece.

12. Drive train test bench (2) for a drive train, comprising at least one test wheel (1) according to at least one of Claims 1 to 11.

## Revendications

1. Roue d'essai (1) pour un banc d'essai de chaîne cinématique (2),
comprenant une jante (7), un palier de roue (8), un dispositif de blocage (9), un arbre de roue (10) et un moyeu de roue (17),
le moyeu de roue (17) étant monté solidaire en rotation sur l'arbre de roue (10),
l'arbre de roue (10) et le moyeu de roue (17) étant maintenus rotatifs dans la jante (7) par l'intermédiaire du palier de roue (8),
le dispositif de blocage (9) étant relié de manière solidaire en rotation à la jante (7), l'arbre de roue (10) étant configuré pour être relié de manière solidaire en rotation, par le biais d'une première bride de raccordement (34), à un arbre de sortie (5) d'une chaîne cinématique (44) à soumettre à essai,
le moyeu de roue (17) étant configuré pour être relié de manière solidaire en rotation, par le biais d'une deuxième bride de raccordement (22), à un arbre d'entraînement (23) du banc d'essai de chaîne cinématique (2),
le dispositif de blocage (9) étant constitué d'une couronne dentée (26) à denture intérieure ayant un nombre de dents N, laquelle est en prise avec un pignon droit (27) à denture extérieure ayant également le nombre de dents N et est ainsi reliée à celui-ci de manière solidaire en rotation, le pignon droit (27) pouvant effectuer un mouvement relatif axial par rapport à la couronne dentée (26), le pignon droit (27) pouvant être amené en contact axial avec un disque de contact (21) par rapport à la couronne dentée (26) par un ressort (28), **caractérisée en ce que** le ressort (28) prend appui dans un couvercle (29), le couvercle (29) étant fixé à la couronne dentée (26) par un assemblage vissé (30) et le dispositif de blocage (9) étant relié de manière solidaire en rotation au palier de roue (8),
le moyeu de roue (17) étant en outre configuré pour être relié de manière solidaire en rotation au dispositif de blocage (9) par le biais d'une troisième bride de raccordement (35), de sorte qu'une aptitude à la rotation de l'arbre de roue (10) par rapport à la jante (7) soit bloquée, la troisième bride de raccordement (35) ne pouvant être reliée que si la deuxième bride de raccordement (22) n'est pas reliée,
en prévoyant en outre que, du fait de l'arrangement de la deuxième bride de raccordement (22) et de la troisième bride de raccordement (35), la troisième bride de raccordement (35) ne peut être reliée que si la deuxième bride de raccordement (22) n'est pas reliée, ceci étant garanti par le fait que la deuxième bride de raccordement (22) et la troisième bride de raccordement (35) sont toutes deux disposées sur le moyeu de roue (17) et se différencient par leurs motifs de raccordement,
pour un blocage du palier de roue (8) et ainsi en vue de la transmission du couple et de la vitesse de rotation d'un véhicule automobile (43) ou d'une chaîne cinématique (44) à la jante d'essai (7), le pignon droit (27) du dispositif de blocage (9) pouvant être relié par liaison de force et donc de manière solidaire en rotation à la troisième bride de raccordement (35) du moyeu de roue (17) par un assemblage vissé, la deuxième bride de raccordement (22) et la troisième bride de raccordement (35) étant ici disposées de manière superposée et présentant respectivement un motif de raccordement (24, 36) différent et, lors de la mise en liaison de la troisième bride de raccordement (35), le pignon droit (27) passant de son contact axial avec le disque de contact (21) à un contact axial avec la bride de raccordement (22) du moyeu de roue (17).

2. Roue d'essai (1) selon la revendication 1,
**caractérisée en ce que** les alésages filetés (25) de la deuxième bride de raccordement (22) présentent un diamètre inférieur à celui des alésages filetés (39) de la troisième bride de raccordement (35).

3. Roue d'essai (1) selon au moins l'une des revendications 1 à 2,
**caractérisée en ce que** le palier de roue (8) comprend un roulement de roue (18) et un boîtier de roulement (19), le roulement de roue (18) étant fixé axialement sur le moyeu de roue (17) au moyen d'une fixation axiale (20) et s'appuyant axialement contre le boîtier de roulement (19) au moyen d'un disque de contact (21).

4. Roue d'essai (1) selon au moins l'une des revendications 1 à 3,
**caractérisée en ce que** l'arbre de roue (10) et le moyeu de roue (17) sont reliés de manière solidaire en rotation par le biais d'une denture à emboîtement, le moyeu de roue (17) étant fixé axialement sur l'arbre de roue (10) par rapport à l'arbre de roue (17) au moyen d'une fixation axiale (32).

5. Roue d'essai (1) selon au moins l'une des revendications 1 à 4,
**caractérisée en ce que** l'arbre de roue (10) et le moyeu de roue (17) sont reliés de manière solidaire en rotation par le biais d'une clavette (52).

6. Roue d'essai (1) selon la revendication 3,
**caractérisée en ce que** le boîtier de roulement (19) et/ou la jante (7) possède au moins une ouverture (54) à travers laquelle est accessible au moins une vis (58) du premier raccordement à bride (34).

7. Roue d'essai (1) selon au moins l'une des revendications 1 à 6,
**caractérisée en ce que** la jante (7) comprend une embase de jante (11) et un disque de jante (12), l'embase de jante (11) étant vissée sur le disque de jante (12).

8. Roue d'essai (1) selon au moins l'une des revendications 1 à 6,
**caractérisée en ce que** la jante (7) comprend une embase de jante (11) et un disque de jante (12), l'embase de jante (11) et le disque de jante (12) étant réalisés d'une seule pièce.

9. Roue d'essai (1) selon au moins l'une des revendications 1 à 8,
**caractérisée en ce que** l'embase de jante (11) comprend une embase extérieure de jante (13) et une embase intérieure de jante (14), l'embase extérieure de jante (13) et l'embase intérieure de jante (14) étant vissées individuellement au disque de jante (11).

10. Roue d'essai (1) selon la revendication 3,
**caractérisée en ce que** le disque de jante (12) et le boîtier de roulement (19) sont réalisés d'une seule pièce.

11. Roue d'essai (1) selon la revendication 3,
**caractérisée en ce que** la jante de roue (7) et le boîtier de roulement (19) sont réalisés d'une seule pièce.

12. Banc d'essai de chaîne cinématique (2) pour une chaîne cinématique, comprenant au moins une roue d'essai (1) selon au moins l'une des revendications 1 à 11.
